# EUROPEAN PATENT SPECIFICATION

(11) **EP 4 070 063 B1**
(45) Date of publication and mention of the grant of the patent: **07.08.2024**
(21) Application number: 20895105.3
(22) Date of filing: 04.12.2020
(51) Int. Cl.: G01M 3/32, B01D 46/10

(54) **SEALING ARRANGEMENT, FILTER AND FILTER HOUSING, METHOD OF MONITORING LEAK TIGHTNESS, AND LEAK TIGHTNESS MONITORING SYSTEM**
DICHTUNGSANORDNUNG, FILTER UND FILTERGEHÄUSE, VERFAHREN ZUR ÜBERWACHUNG DER LECKDICHTHEIT UND SYSTEM ZUR ÜBERWACHUNG DER LECKDICHTHEIT
AGENCEMENT D'ÉTANCHÉITÉ, FILTRE ET BOÎTIER DE FILTRE, PROCÉDÉ DE SURVEILLANCE D'ÉTANCHÉITÉ AUX FUITES ET SYSTÈME DE SURVEILLANCE D'ÉTANCHÉITÉ AUX FUITES

(30) Priority: 04.12.2019 SE 1951394
(43) Date of publication of application: 12.10.2022
(73) Proprietor: Camfil AB, 111 34 Stockholm (SE)
(72) Inventor: RENARD, Yann, 610 71 Vagnhärad (SE); HEDLUND, Kenny, 61933 Trosa (SE); SAVIN, Lionel, Singapore 557320 (SG); LANS, Erik, 61995 Västerljung (SE)
(74) Representative: Zacco Sweden AB
(86) International application number: PCT/SE2020/051171
(87) International publication number: WO 2021/112753

(56) References cited:
- US-A- 6 117 202
- US-A1- 2003 189 273
- US-A1- 2006 243 132
- US-A1- 2008 216 457
- US-A1- 2017 007 730
- US-B1- 6 758 970
- US-B2- 8 328 901

## Description

### TECHNICAL FIELD

The present disclosure relates to sealing and monitoring of sealing. More specifically, the disclosure relates to a sealing arrangement, an air filter and a filter housing, a method of monitoring leak tightness of one or more sealing arrangements, a leak tightness monitoring system, a computer program product arranged to perform the method, a sealing arrangement and a method of monitoring sealing integrity of a pharmaceutical production space.

### BACKGROUND ART

In situations where it is necessary to seal off an interior space from the outside, gaskets are commonly used to seal off gaps between structures that enclose such an interior space, to prevent passage of unwanted substances such as particles, fluids, gas or other contaminants through the gap. The gasket can thereby serve to keep the interior space clean, or to prevent unwanted substances from escaping from the interior space. In cases where the sealed off interior space contains equipment and/or substances which are particularly sensitive to contaminants, or contains substances which are hazardous and cannot be allowed to escape into the surrounding environment, it is especially important to ensure that the sealing is sufficiently leak tight. It is also important to ensure that the sealing does not become compromised, and thus it necessary to regularly check the sealing tightness of the gasket, to be able to detect any leakage. Standard methods for leakage detection are available, for example as described in e.g. ISO 10648-2, EN12237 or EN1886.

A sealing arrangement corresponding to the preamble of independent device claim 4 is disclosed in US4765810.

### SUMMARY

The present disclosure relates to sealing a gap between structural elements and to monitoring of such sealing, and aims at providing improved leak tightness and monitoring of leak tightness to ensure that the sealing is always under control.

Accordingly, the present disclosure relates to a sealing arrangement according to claim 4 and comprising a gasket arranged to seal a gap formed between a first element and a second element, wherein the gasket is arranged to be located in the gap and to be in contact with the first and the second elements. The gasket comprises two elongated gasket members located at a distance from each other so as to form an intermediate gasket space confined by the gasket members and the first and second elements, and the sealing arrangement further comprises a pressure source adapted to apply a pressure on the intermediate gasket space. The pressure source is preferably configured to maintain a set pressure difference towards the surroundings. The pressure may be an overpressure or an underpressure, which means that the pressure is applied by the pressure source so as to create positive or negative pressure difference relative to the surroundings. This allows for improved prevention of leakage from one side of the gasket to the other of the gasket. Thus, if a leak were to occur between one of the gasket members and the first or second element, or within the gasket members or the first and second elements, the pressure within the intermediate gasket space will prevent any substance from passing through, since the pressure within the intermediate gasket space will force a leaking substance to move in a desired direction by means of the applied pressure.

The present disclosure further relates to a filter for use as the first element in the sealing device, and a filter housing comprising a mounting structure for use as the second element of the filter housing. The filter and filter housing are described I more detail below.

The present disclosure further relates to a method of improving leak tightness in a seal according to claim 1.

As mentioned above, the present disclosure also relates to a filter housing according to claim 14.

As mentioned above, the present disclosure also relates to an air filter according to claim 15.

The present disclosure further relates to a method of monitoring sealing integrity of a pharmaceutical production space, in which a production batch is produced, wherein the monitoring is performed continuously by means of leak detection using the sealing arrangement. By immediately detect a leak in a sealed pharmaceutical production space, a production batch that has been compromised by leakage can immediately be identified, and unnecessary waste of produced pharmaceutical products can be avoided.

Details of the subject-matter mentioned above will become apparent from the detailed description given below.

### BRIEF DESCRIPTION OF THE DRAWINGS

The features and advantages of the present disclosure will be more fully appreciated by reference to the following illustrative and non-limiting detailed description of example embodiments of the present disclosure, when taken in conjunction with the accompanying drawings.
Figure 1 shows a perspective view of a sealing arrangement according to the present disclosure;
Figure 2 shows schematically a sealing arrangement according to the present disclosure;
Figure 3 shows schematically the steps of an example of a method according to the present disclosure.
Figure 4a shows schematically a sealing arrangement including a leakage detection device according to the present disclosure.
Figure 4b shows schematically a sealing arrangement including a leakage detection device according to the present disclosure.
Figure 5 shows schematically a leak tightness monitoring system according to the present disclosure.
Figure 6 shows schematically a control unit suitable for use in connection with the leakage detection device of the system illustrated in Fig. 5.
Figure 7 shows a perspective view of a further sealing arrangement according to the present disclosure
Figure 8 shows schematically the steps of an example of a further method of monitoring leak tightness according to the present disclosure.
Figures 9a-9c and 9a'-9c' show schematically embodiments of an air filter comprising a two member gasket.
Figure 10 is a schematic perspective view of an air filter of the present disclosure.
Figure 11 is a schematic cross-sectional view of a filter housing and an air filter mounted therein.
Figures 12a-12b show schematically an embodiment of a filter housing and an air filter mounted therein.
Figure 13 shows schematically another embodiment of a filter housing and an air filter mounted therein.
Figure 14 shows schematically yet another embodiment of a filter housing and an air filter mounted therein.

### DETAILED DESCRIPTION

As mentioned above, the present disclosure relates to sealing and monitoring leakage tightness. In many situations it may be necessary to seal off the interior volume of an enclosure or a room from the surrounding environment. This disclosure particularly relates to devices and methods in which a gasket is used to seal a gap between structural elements that enclose such an interior volume, to prevent passage of unwanted substances such as particles, fluids, gas or other contaminants through the gap, and to systems and methods related to that. The gasket serves to seal the gap to prevent any leakage through the gap. Thereby, the interior volume of the enclosure can be kept clean, which is important for example within the pharmaceutical industry or within manufacture of electrical components. Similarly, if the enclosure or room accommodates items or activities, which may release unwanted or hazardous substances, such as for example toxic or pathogenic substances, such substances can be prevented from escaping from the enclosure or room.

It may often be desired or necessary to provide fresh air to the sealed enclosure or room, or to vent out gases there from, also when the enclosure or room must be fully leak proof. In such cases a filter can be mounted in an opening between the interior of the sealed volume and the surrounding. Leakage between the filter and the adjacent structure, against which the filter is mounted, can of course not be accepted, and the gap between a filter frame of the filter and the mounting structure, is thus a position where the devices, systems and methods of the present disclosure may be of particular use. In addition, the devices, systems and methods of the present disclosure allow easy installation of a filter in a filtering equipment where the present sealing principle is applied, which is advantageous since it is important the filter can easily be replaced when needed.

According to the present disclosure an improved sealing arrangement is provided, comprising a gasket arranged to seal a gap formed between a first element and a second element. The first element may typically be a movable or replaceable part, that is mounted to cover an access opening in an enclosure or room, such as for example a filter, or a hatch or door. The second element may typically be a structure against which the first element is held or mounted, such as for example a wall casing of the enclosure or room. The gasket is arranged to be located in the gap formed between a surface of the first element and surface of the second element, and is arranged to be in contact with both the first and second elements. The gasket comprises two elongated gasket members located on a distance from each other so as to form an intermediate gasket space confined by the gasket members and the first and second elements.

The gasket can be any suitable gasket or seal that can be arranged as two elongated members, leaving a space between them. For example, the gasket may be made of e.g. foamed polyurethane, solid polyurethane potting, polyurethane gel, silicone gel, self-adhesive EPDM rubber (ethylene propylene diene monomer rubber), or self-adhesive neoprene. It may be attachable or attached to the surface of one or both of the first and second elements, for example by being made of self-adhesive material or by being attached using an adhesive to one or both of the first and second elements. The gasket should be dimensioned to ensure a sufficient seal in the gap between the surfaces of the first and second elements, i.e. have a length corresponding to the length of the gap and a height exceeding the height of the gap to such an extent that a proper seal is obtained.

The gasket may be comprised of two entirely separate elongated gasket members, which gives flexibility to position the gasket members at different distances from each other, as desired depending on the dimensions of the gap. Alternatively, the two elongated gasket members may be connected to each other by strips or bands having a desired length to facilitate positioning the members at a constant distance from each other in the gap. The distance between the two elongated gasket members may preferably be 0.5 to 100 mm, more preferably 2-90 mm, most preferably 5-50 mm. The height of the gap is the distance between the first element and the second element, and may preferably be 0.5 to 50 mm, more preferably 1-20 mm. The cross-sectional area of the intermediate gasket space may preferably be 0.25 to 5000 mm², more preferably 2-2000 mm².

Typically, the first element is comprised in a frame of a filter, such as an air filter, and the second element is comprised in a mounting structure or housing, against which the filter is mounted, whereby ventilation of a sealed space can be obtained. The gasket may be pre-attached to the filter frame, and be arranged so as to surround the periphery of the filter media pack assembly held by the filter frame. As the two member gasket completely surrounds the opening in the filter frame, leak tightness can effectively be monitored. The area to be sealed by the gasket, i.e. the area surrounded by the gasket, can typically be 250x250 mm to 1300x1900 mm. To the extent the term "filter element" is used herein, it is intended to refer to a filter comprising a filter frame and a filter media pack assembly.

The sealing arrangement further comprises a pressure source adapted to apply a pressure on the intermediate gasket space. The pressure may be an overpressure or an underpressure, which means that the pressure is applied by the pressure source so as to create positive or negative pressure difference relative to the surroundings, i.e. outside of the intermediate gasket space. The pressure can suitably be applied by the pressure source such that the pressure difference between the intermediate gasket space and the surrounding is 50 Pa-1000 kPa, preferably 1 kPa-500 kPa.

As the gasket is comprised of two separate members, the intermediate gasket space is open toward the surfaces of the first and second elements, the application of a pressure to the intermediate gasket space will have the effect that if a leak should arise on either side of the gasket, the pressure within the intermediate gasket space will be affected, such as a leakage flow is pushed back if the applied pressure is an overpressure, or sucked into the intermediate gasket space if the applied pressure is an under pressure as compared to the pressure outside the gasket.

The pressure source is preferably configured to continuously maintain a set pressure difference towards the surroundings to allow continuous improved leak tightness.

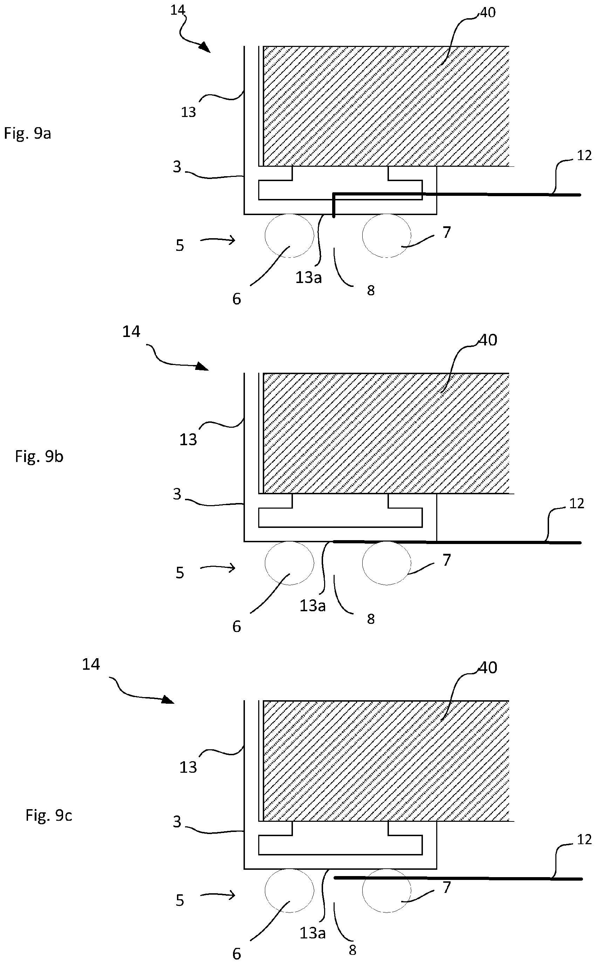

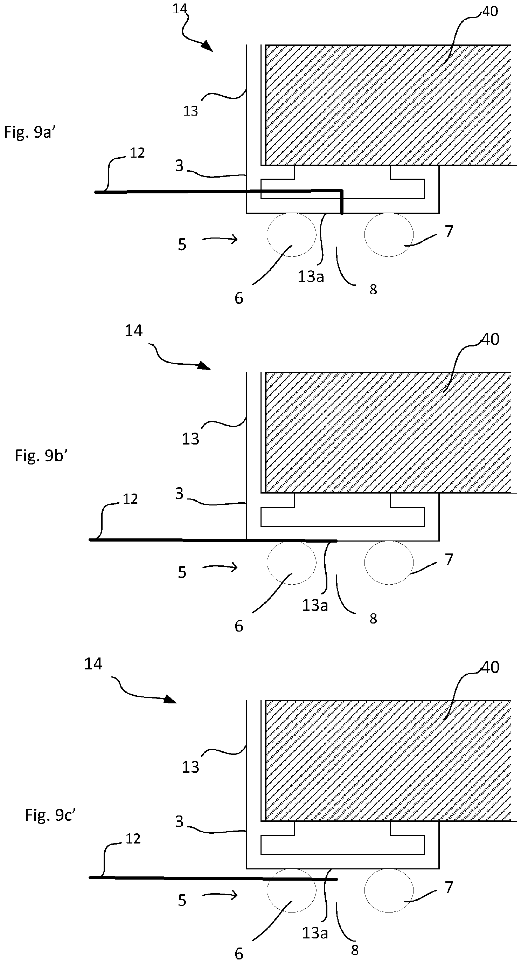

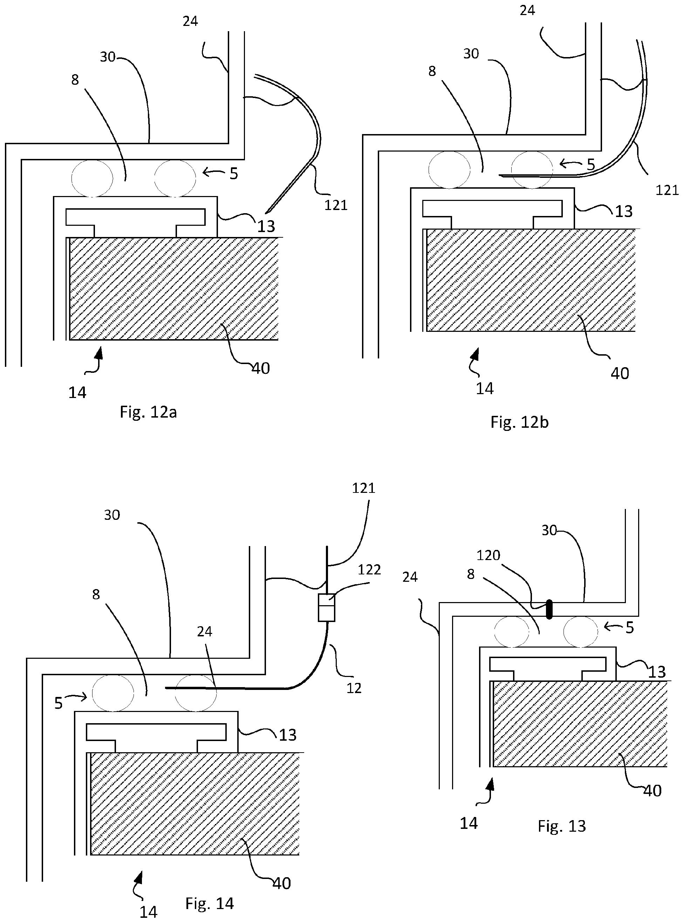

The pressure source is suitably arranged in fluid communication with the intermediate gasket space between the gasket members via a channel or conduit, which may preferably be arranged to be connected to the intermediate gasket space through the mounting structure, or in the form of a tube attached to the filter housing and inserted through one of the gasket members. This allows the sealing arrangement to be used without any need of manipulating the gasket. Alternatively, the channel or conduit may suitably be arranged to be connected to the intermediate gasket space through the frame of a filter, such as an air filter, which enables applying pressure to the intermediate gasket space also in cases where the mounting structure is not, or cannot be, provided with connection to a pressure source. The connection can also be provided in the filter in other ways as described in more detail below and illustrated in the drawings, e.g. Figs. 9a-9c' and Fig. 14. In yet an alternative, a separate connection can be provided from a pressure source and inserted into the intermediate gasket space.

The pressure source can be any suitable pressure or vacuum source, such as an air pump or a pressure or vacuum tank, or a centralized compressed air system.

As mentioned above, methods for leakage detection are available, for example according to the standards ISO 10648-2, EN12237 or EN1886. These methods generally include applying a pressure to the interior volume of the sealed enclosure or room to be leak tested, stabilising the pressure and monitoring any changes in the pressure on the volume during a test time period.

The above sealing arrangement according to the present disclosure may advantageously comprise a leakage monitoring device comprising a leakage sensor positioned in the channel or conduit between the pressure source and the intermediate gasket space. The sensor is configured to be able to detect a pressure change within the intermediate gasket space, which is indicative of leakage. When the pressure source is connected to the intermediate gasket space, leakage detection can be available at all times, and can be applied also while the sealed enclosure or room to be tested is in use or operation. Thus, the leakage detection can be applied on the actual equipment to be used, including the seal of the gap during service. No substitute parts, such as blanking plates or the like, need to be used.

The leakage sensor is suitably selected in accordance with the leak tightness requirement set for the sealed enclosure or room, to be able to detect unacceptable leaks. The leakage sensor can be an air flow sensor or a pressure sensor, for example a thermal airflow sensor, pressure drop measurement device for measurement over capillaries or orifices, rotating vane, vortex meter, or ultrasonic flow meter.

Preferably, the leakage monitoring device further comprises a control sensor located between the pressure source and the surroundings, to allow to monitor that the pressure source is operating properly. The control sensor can be selected from the same types as the leakage sensor.

The leakage sensor may be configured to communicate with an evaluation device, such as a computer, to allow remote surveillance of the leakage monitoring. For example the sensor can include a transmitter for wireless communication with a receiver, or the communication can occur via wired connection. The leakage monitoring device further advantageously comprises a backup pressure source arranged parallel to the pressure source, to minimize the risk of pressure failure.

The present disclosure further relates to a method comprising applying a pressure to the intermediate gasket space of one or more sealing arrangements as described above, preferably comprising continuously applying pressure to the intermediate gasket space (8) by means of the pressure source (10).

The method may advantageously include monitoring leak tightness of one or more sealing arrangements as defined above, comprising
- obtaining leakage detection value from a leakage sensor,
- comparing the leakage detection value with a setpoint value; and
- if the leakage detection value from the leakage sensor is equal to, or exceeds the setpoint value, generating a message indicating leakage.

The one or more sealing arrangements monitored by the method can be located in the same or different sealed enclosure or room. The set point values are set corresponding to the leak tightness requirement.

The method suitably comprises obtaining a control value from a control sensor, and if said control value from the control sensor deviates from a control setpoint value, establishing that the pressure source is not operating. The method may further comprise activating the backup pressure source if said control value from the control sensor deviates from said control setpoint value.

Most preferably, the monitoring is performed continuously by continuously applying pressure to the intermediate gasket space by means of the pressure source, and continuously obtaining the leakage detection values from the leakage sensor, and optionally also from the control sensor, and continuously comparing said leakage detection values with setpoint values. By continuously monitoring the leak tightness of the gap sealed by the sealing arrangement, a leak can be immediately detected, and accordingly no backtracking to an earlier leak tightness validation is needed. In the manufacture of products sensitive to contamination, such as pharmaceuticals, the process batch currently being produced when a leak is detected can be identified and be tagged to be checked or disposed of. This can lead to less waste, since only the tagged batch needs to be checked or disposed of, contrary to traditional intermittent leak tightness validation where all batches produced since the last successful validation may be compromised.

A leak tightness monitoring system is also provided according to the present disclosure, comprising one or more confined volumes, and an evaluation device. The confined volumes are enclosures or rooms as discussed above, each comprising a gap sealed by a sealing arrangement as defined above. Each room can include multiple filters or other elements that need to be sealed. The intermediate gasket space of each sealing arrangement that seals each confined volume is connected to a pressure source, via conduits, and a leakage sensor is located on each conduit between the pressure source and the intermediate gasket space, each leakage sensor comprising a transmitter configured to continuously transmit leakage detection data to the evaluation device, and the evaluation device comprising a receiver to continuously receive the leakage detection data. The system thus allows multiple confined volume units to be leak tightness monitored at the same time.

The intermediate gasket space of each sealing arrangement comprised in the system is preferably connected to the same pressure source, for effective application of pressure to all sealing arrangements. The evaluation device advantageously includes a control unit comprising a memory unit and a processor, wherein the memory unit is arranged to be able to store computer readable code that when executed on the processor performs the method of leak tightness monitoring as describe above, thereby enabling automatic surveillance of the leak tightness monitoring. The evaluation device may preferably also include a communication means arranged to be able to communicate with an external recipient, to enable remote surveillance. The evaluation device is suitably configured to evaluate presence of leaks in the gap sealed by the gasket, based on received data from the leakage sensor and/or to evaluate proper operation of the pressure source based on data received from the control sensor. The control unit may also comprise means to transmit a signal to activate the back-up pressure source if needed.

For example, a confined volume comprised in the system can be a containment enclosure, the system comprises a housing and an air inlet opening into which an air filter is fitted, wherein the air filter is sealed to the housing by means of a sealing arrangement as defined above. Another example of a confined volume that can be included in the system is a cleanroom provided with an air filtration arrangement where the system comprises one or more mounting structures wherein air filters are sealed by means of a sealing arrangement as defined above. Yet another example of a confined volume that can be included in the system is a pharmaceutical production space provided with an air filtration arrangement where the system comprises a mounting structure wherein the air filter is sealed to a mounting structure by means of a sealing arrangement as defined above.

The present disclosure further relates to a computer program product arranged to perform the method of monitoring leak tightness described above, when executed in a filter monitoring system as described above and including the mentioned control unit.

As mentioned above, the present disclosure also relates to an air filter for use as the first element in the above mentioned sealing arrangement. The air filter is configured to be mounted to a filter mounting structure in a filter housing and comprises a filter frame having an opening in which an air filter media pack assembly is positioned, and a gasket configured to seal a gap between the filter frame and the filter mounting structure in the filter housing. The air filter media pack assembly can be of any suitable type that is used within air filtration, such as panel type, box type or V type intended to filter a) gaseous or vapor contaminants or b) fine particulate matter, where the latter can have any of the filter classes E10, E11, E12, H13, H14, U15, U16, U17 according to EN1822 or being classified according to ISO 16890. The gasket is attached to the filter frame and is arranged to surround the opening. The gasket comprises two elongated gasket members, where an inner elongated gasket member is configured to surround the opening where the air filter media pack assembly is positioned, and an outer elongated gasket member is configured to surround the inner gasket and the opening. The gasket is attached to the frame so that the elongated gasket members are held in position on a distance from each other so as to form an intermediate gasket space between the gasket members and a surface of the frame onto which the gasket is attached. The air filter comprises a channel or conduit arranged to connect the intermediate gasket space with the surroundings, and is configured to be connected to a pressure source to allow application of pressure on the intermediate gasket space during use. The channel or conduit is arranged through the filter frame, or through one of the elongated gasket member, or is disposed on the surface of the filter frame onto which the elongated gasket members are attached.

The channel or conduit can be configured to be connected to the pressure source on an upstream or a downstream side of the filter. Arranging the connection to the pressure source on the upstream side may be preferred if it is deemed best to keep the pressure equipment on the side of the filter where the material to be filtered off is present. Arranging the connection to the pressure source on the downstream side may be preferred for example if there is no sufficient space for the pressure equipment on the upstream side.

The channel or conduit may also be configured to be directed toward the opening of the filter frame, which may advantageous in case the filter housing was not originally set up for sealing be the above sealing arrangement, and there is only little space between the filter housing and the periphery of the filter.

The channel or conduit may be included in the air filter and be arranged to connect the intermediate gasket space with the surroundings, to allow the intermediate gasket space to be connected to a pressure source. The channel can be arranged through the filter frame, for example as a through bore, or through one of the elongated gasket member, for example in the form of a tube inserted through one of the gasket members, or may be disposed on the surface of the filter frame onto which the elongated gasket members are attached, for example in the form of a groove formed in the surface of the filter frame, or in the form of a tube arranged between the surface of the filter frame and one of the elongated gasket members. By providing the air filter with both the two member gasket and a channel or conduit for connection to a pressure source, the principle of the above sealing arrangement can be applied to air filtration equipment, which was originally not prepared for this, and improved monitoring of leak tightness can thus be obtained.

As mentioned above, the present disclosure also relates to a filter housing configured for mounting of a filter against a mounting structure comprised in the filter housing. The mounting structure is configured to be used as the second element of the above-mentioned sealing arrangement. The filter housing comprises a connection is adapted to be coupled to a pressure source, and being configured to connect an intermediate gasket space to the pressure source. The intermediate gasket space is formed between two elongated gasket members of a gasket arranged between the mounting structure and the filter. The connection may preferably be a channel or conduit arranged through the mounting structure, wherein a first end of the channel or conduit is arranged in a position in the mounting structure that is configured to be located within the intermediate gasket space when a filter is mounted in the filter housing. Alternatively, the connection may preferably be a conduit provided within the filter housing, said conduit comprising an insertion portion configured to be inserted through one of the elongated gasket members of a gasket arranged between the mounting structure and the filter. The conduit provided within the filter housing may be attached to the inside of the filter housing for example by a wire, clamp or glue.

In yet an alternative, the filter housing may comprise a connection in the form of a conduit comprising a connector configured to be connected to a channel or conduit provided in the filter between an intermediate gasket space formed between two elongated gasket members included in the filter. This connection of pressure to the intermediate gasket space also works in a situation where the filter does not include a pre-installed channel or conduit.

An air filtration apparatus may comprising an air filter of the variants described above and a filter housing comprising a mounting structure, wherein the air filter is mounted in the filter housing so that the gasket is located in a gap between the filter and the mounting structure so that the gasket members are in contact with the filter frame and the mounting structure.

A method of installing the air filter in the system of the present disclosure may comprise the steps of: positioning the sealing device in the gap between the filter frame and the mounting structure of the filter housing ; mounting the filter frame to the mounting structure so that the gasket members of the sealing device are in contact with the filter frame and the mounting structure; connecting the channel or conduit to the pressure source to allow a pressure to be applied on the intermediate gasket space of the sealing device.

The present disclosure also provides a sealing arrangement comprising a gasket arranged to seal a gap formed between a first element and a second element, wherein the gasket is arranged to be located in the gap and to be in contact with the first and the second elements, wherein the first element is comprised in a frame of a filter, such as an air filter, and the second element is comprised in a mounting structure against which the filter is mounted, and where the sealing arrangement includes a means for continuous monitoring of sealing integrity. The sealing arrangement preferably comprises means to directly detect a loss of sealing integrity. The first element of the sealing arrangement may suitably be comprised in a frame of holding a filter media pack assembly of the panel type, box type or V type intended to filter a) gaseous or vapor contaminants or b) fine particulate matter, the latter having any of the filter classes E10, E11, E12, H13, H14, U15, U16, U17 according to EN1822 or being classified according to ISO 16890.

Further, there is provided a method of monitoring sealing integrity of a pharmaceutical production space, in which a production batch is produced, where the monitoring is performed continuously by means of leak detection using the mentioned sealing arrangement, which includes a means for continuous monitoring of sealing integrity. The method advantageously comprises the step of generating a message indicating leakage if a leak incident is detected, and transferring said message to a control unit being capable to tag said leak incident to the production batch currently produced.

As mentioned above, continuous monitoring of leak tightness of a gap sealed by the defined sealing arrangement, enables a leak to be immediately detected, and accordingly no backtracking to an earlier leak tightness validation is needed. In the manufacture of products sensitive to contamination, such as pharmaceuticals, the process batch currently being produced when a leak is detected can be identified and be tagged to be checked or disposed of. This leads to less waste, since only the tagged batch needs to be checked or disposed of, contrary to traditional intermittent leak tightness validation where all batches produced since the last successful validation must be checked or disposed of.

In the sealing arrangement and method for continuous monitoring sealing integrity all details given above for the first mentioned sealing arrangement, method, system and computer program apply equally.

### DESCRIPTION OF EMBODIMENTS SHOWN IN THE DRAWINGS

The subject-matter of the present disclosure will now be described with reference to the accompanying drawings, in which non-limiting example embodiments of the disclosure are shown. The subject-matter may, however, be embodied in other forms and should not be construed as limited to the herein disclosed embodiments. The disclosed embodiments are provided to fully convey the scope of the disclosure to the skilled person.

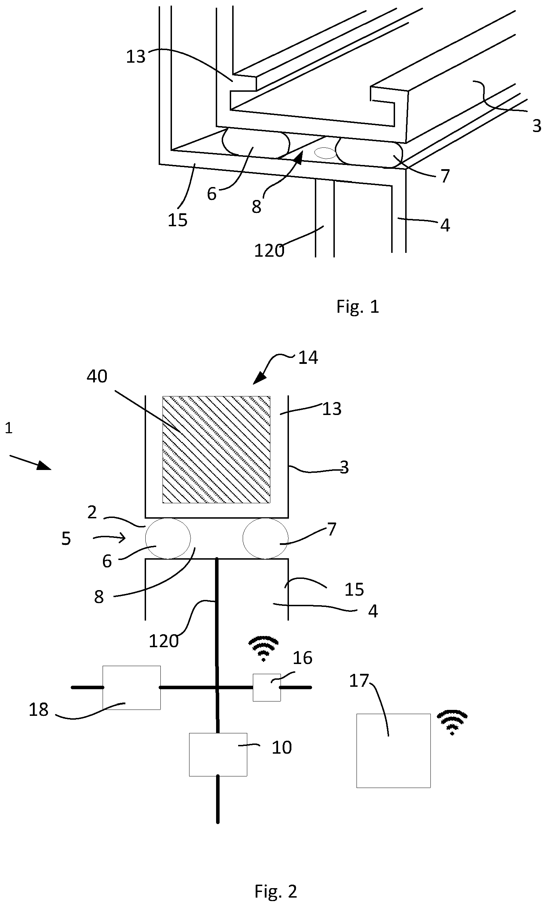

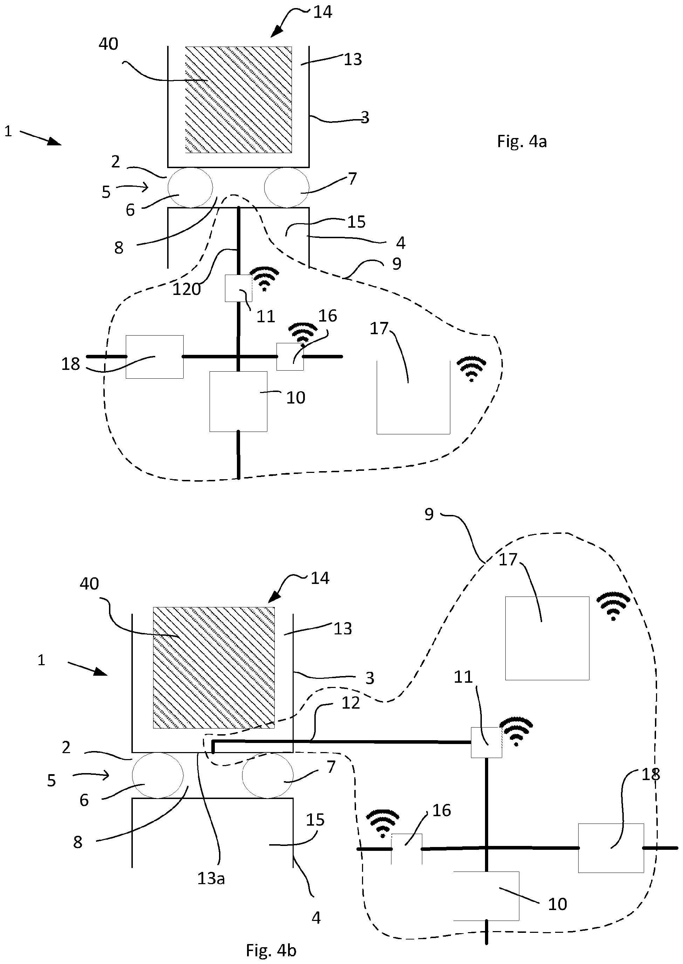

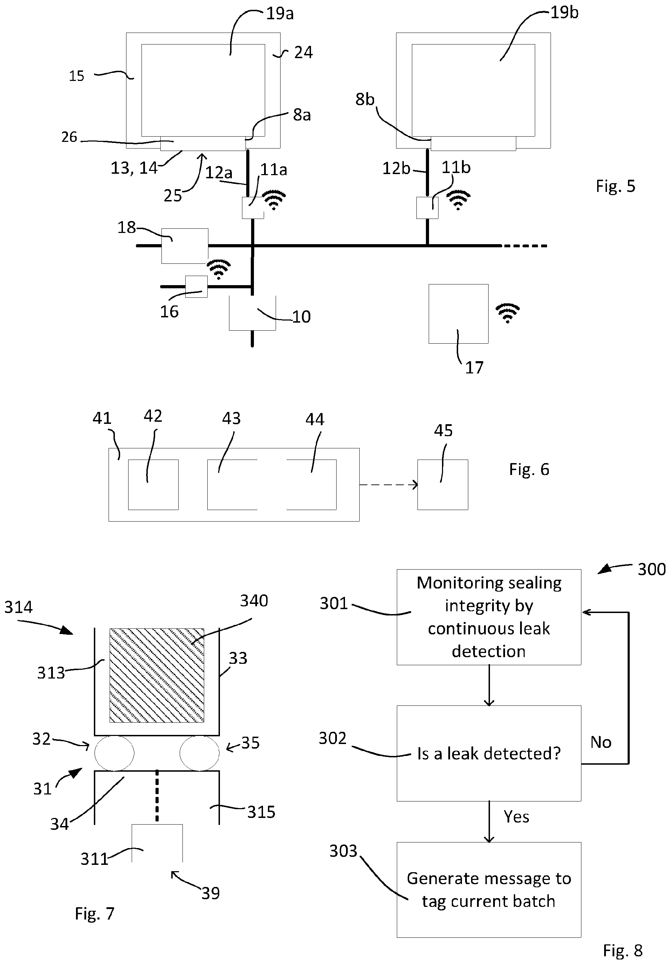

Figure 1 shows a perspective view of a part of a sealing arrangement according to the present disclosure. Figure 2 shows schematically a sealing arrangement according to the present disclosure, and Figures 4a and 4b show schematically the sealing arrangement including a leakage detection device. In Figure 4a the pressure source is connected to the intermediate gasket space via the mounting structure 15, and in Figure 4b, the pressure source is connected to the intermediate gasket space via the filter frame 13. A system comprising one or more volumes including sealing arrangements is shown in Figure 5. The reference numbers refer to the same or corresponding elements or components in these drawings, although they may be positioned differently.

The sealing arrangement 1 comprises a gasket 5 arranged to seal the gap 2 formed between the first element 3 and the second element 4, wherein the gasket 5 is arranged to be located in the gap 2 and to be in contact with the first and the second elements 3,4. The gasket comprises two elongated gasket members 6,7 located on a distance from each other so as to form an intermediate gasket space 8 confined by the gasket members 6,7 and the first and second elements 3,4. A pressure source 10 (not shown in Fig. 1) is adapted to apply a pressure on the intermediate gasket space 8. The pressure source is arranged in fluid communication with the intermediate gasket space 8 between the gasket members 6,7 via a conduit 12. A leakage monitoring device 9 is included in the sealing arrangement and comprises a leakage sensor 11 positioned in the conduit 12 between the pressure source and the intermediate gasket space 8. As can be seen in Figs. 2, 4a,b the first element 3 is comprised in a frame 13 of a filter 14 and the second element 4 is comprised in a mounting structure 15 against which the filter is mounted. A filter media pack assembly 40 is mounted in the frame 13. Fig. 1 also shows how the conduit 12 is arranged to be connected to the intermediate gasket space 8 through the mounting structure 15. As illustrated in Figs. 2, 4a,b, the leakage monitoring device may further comprise an control sensor 16 located between the pressure source and the surroundings. The leakage sensor 11 comprises a transmitter configured to communicate with an evaluation device 17, which comprises a receiver to receive information from the leakage sensor or the control sensor. A backup pressure source 18 is arranged parallel to the pressure source 10.

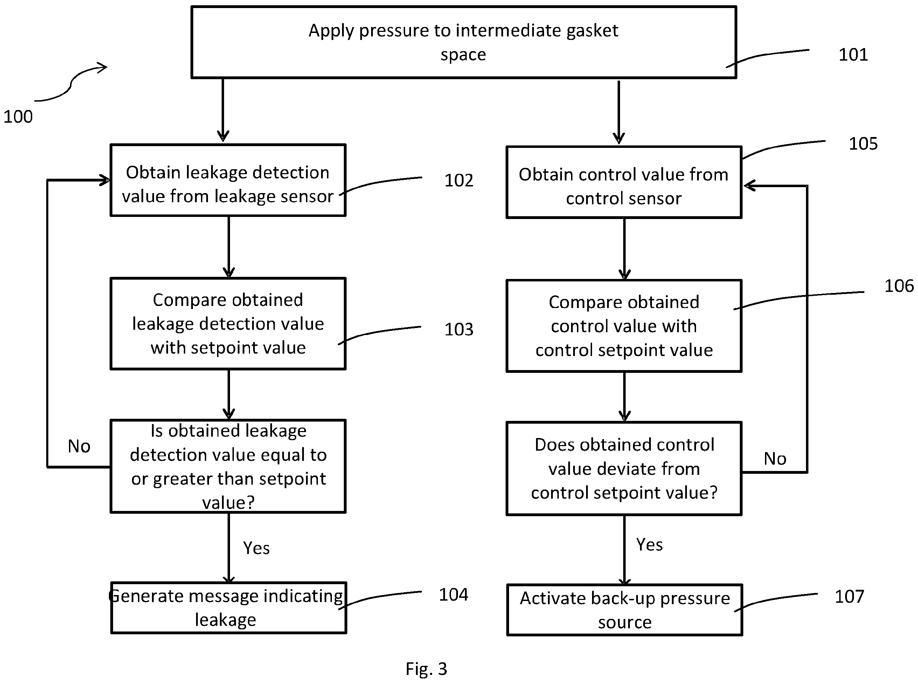

Figure 3 shows schematically the steps of an example of a method of monitoring leak tightness according to the present disclosure, wherein the method comprises applying a pressure 101 to the intermediate gasket space 8 by means of the pressure source 10, obtaining leakage detection value 102 from the leakage sensor 11; comparing the leakage detection value 103 with a setpoint value; and if the leakage detection value from the leakage sensor 11 is equal to, or exceeds the setpoint value, generating a message 104 indicating leakage. Further steps may be obtaining an control value 105 from an control sensor 16; and, if said control value from the control sensor deviates from a control setpoint value, establishing 106 that the pressure source 10 is not operating. The method can also comprise activating 107 the backup pressure source 18 if said control value from the control sensor deviates from said control setpoint value. The monitoring is preferably performed continuously by continuously applying pressure to the intermediate gasket space 8 by means of the pressure source 10, and continuously obtaining the leakage detection values from the leakage sensor 11, and optionally also from the control sensor 16, and continuously comparing said leakage detection values with setpoint values.

Figure 5 shows schematically a system according to the present disclosure. The leak tightness monitoring system comprises one or more confined volumes 19a,19b, each volume being sealed by a sealing arrangement as shown in Figures 1, 2 and 4a, b, and includes a leak tightness evaluation device 17. The intermediate gasket space 8a,8b of each sealing arrangement that seals each confined volume is connected to a pressure source 10, via conduits 12a,12b, and a leakage sensor 11a,11b is located on each conduit 12a,12b between the pressure source 10 and the intermediate gasket space 8a,8b. The conduits 12a,12b can be arranged in the air filter in various ways, such as those illustrated in Figs. 9a-9c', or can be provided in the filter housing as described below.

Each leakage sensor 11a,11b comprises a wired connection or wireless transmitter configured to continuously transmit leakage detection data to the leak tightness evaluation device 17, and the evaluation device 17 comprises a receiverto continuously receive the leakage detection data. The intermediate gasket space 8a,8b of each sealing arrangement is connected to the same pressure source 10. The confined volume 19a,19b schematically shown in Fig. 5 is a containment enclosure, comprising a housing 24 and an air inlet opening 25 into which a filter 26 is fitted. The filter is sealed to the housing by means of a sealing arrangement as illustrated in Figures 1, 2 and 4a, 4b.

Figure 6 shows schematically a control unit suitable for use in connection with the leakage detection device of the system illustrated in Figure 5. The control unit 41 comprises a memory unit 42 and a processor 43, and the memory unit 42 is arranged to be able to store computer readable code that when executed on the processor performs the method monitoring leak tightness. The control unit preferably include communication means 44 arranged to be able to communicate with an external recipient 45.

Figure 7 shows a perspective view of a further sealing arrangement according to the present disclosure. The sealing arrangement 31 comprises a gasket 35 arranged to seal a gap 32 formed between a first element 33 and a second element 34, and the gasket is arranged to be located in the gap 32 and to be in contact with the first and the second elements 33,34, wherein the first element is comprised in a frame 313 of an air filter 314 and the second element is comprised in a mounting structure 315 against which the air filter is mounted. The sealing arrangement includes a means 39 for continuous monitoring of sealing integrity, which comprises means 311 to directly detect a loss of sealing integrity. In Fig. 7 the gasket is illustrated by two elongated elements, but any suitable seal or gasket may be used.

Figure 8 shows schematically the steps of an example of a further method of monitoring leak tightness according to the present disclosure. This method is for monitoring sealing integrity of a pharmaceutical production space, in which a production batch is produced, and is performed continuously by means of leak detection 301 using the sealing arrangement shown in Figure 7. The method may further comprise the step of generating a message 302 indicating leakage if a leak incident is detected, and transferring 303 said message to control unit being capable to tag said leak incident to production batch currently produced.

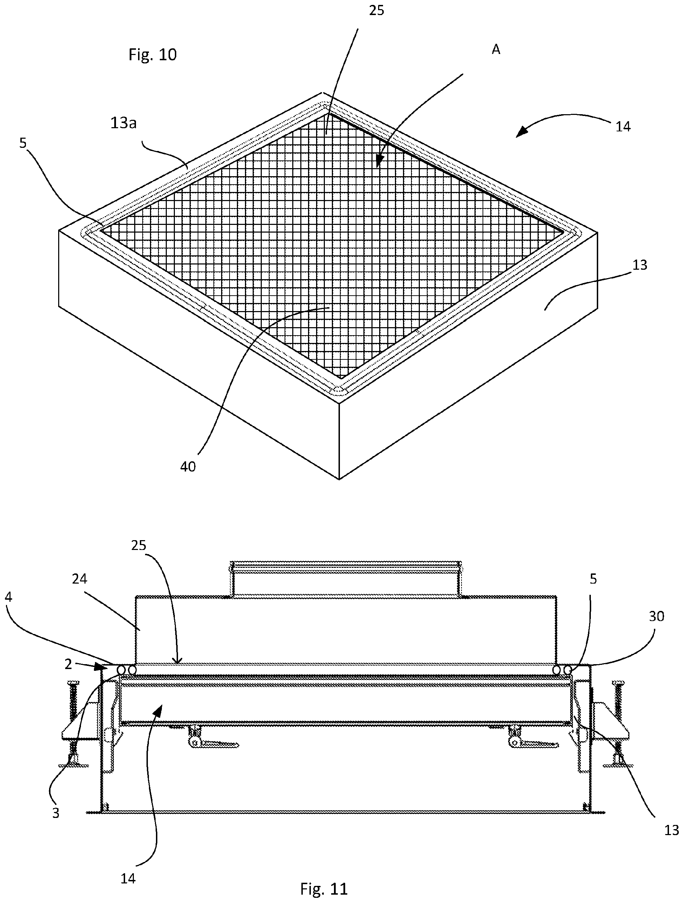

Figs. 9a-9c and 9a'-9c' schematically illustrate embodiments of an air filter comprising a two member gasket and where a channel or conduit (12) configured for connection to a pressure source is included in the air filter. Figure 10 is a schematic perspective view of an air filter.

The air filter 14 is adapted to be used as the first element 3 in the sealing arrangement described above. The air filter 14 is configured to be mounted to the filter mounting structure 30 in the filter housing 24. As shown in Fig. 10, the filter 14 comprises a filter frame 13 having an opening 25 in which an air filter media pack assembly 40 is positioned. A gasket 5 configured to seal a gap 2 between the filter frame and a filter mounting structure 30 in the filter housing 24, is attached to the filter frame 13 and is arranged to surround the opening 25. The gasket 5 comprises two elongated gasket members 6,7, where an inner elongated gasket member 6 surrounds the opening 25 where the air filter media pack assembly 40 is positioned, and an outer elongated gasket member 7 surrounds both the inner gasket 6 and the opening 25. The gasket is attached to the frame so that the elongated gasket members 6,7 are held in position on a distance from each other and an intermediate gasket space 8 is formed between the gasket members 6,7 and a surface 13a of the frame 13 onto which the gasket is attached. The intermediate gasket space 8 is configured to be connected to a pressure source via a channel or conduit 12 to allow application of pressure on the intermediate gasket space 8 during use.

As illustrated in Figs. 9a-c, 9a'-9c', the air filter may comprise a channel or conduit 12 arranged to connect the intermediate gasket space 8 with the surroundings (not shown in Fig. 10). The channel 12 may be arranged through the filter frame (Fig. 9a; 9a'), or through one of the elongated gasket members 6,7 (Fig. 9c; 9c'), or is disposed on the surface 13a of the filter frame 13 onto which the elongated gasket members are attached (Fig. 9b; 9b'). The channel or conduit 12 can be directed toward the opening 25 of the filter frame, as illustrated in Figs. 9a-c or can be directed away from the opening 25 of the filter frame, as illustrated in Figs. 9a'-9c'. The channel or conduit 12 can be configured to be connected to the pressure source on an upstream or downstream side of the filter depending of the filter application.

Figure 11 illustrates how an air filter can be mounted against a mounting structure 30 in a filter housing 24. The connection to a pressure source is not shown in this drawing. Figures 12a-12b show schematically an air filter mounted in a filter housing. Figure 13 shows schematically another filter housing and an air filter mounted therein. An air filtration apparatus includes an air filter 14 and a filter housing 24 comprising a mounting structure 30, wherein the air filter is mounted in the filter housing so that the gasket 5 is located in the gap 2 between the filter and the mounting structure so that the gasket members 6,7 are in contact with the filter frame and the mounting structure.

Figures 12a-12b, 13 and 14 show schematically embodiments of a filter housing and an air filter mounted therein. The filter housing 24 is configured for mounting of the filter 14 against a mounting structure 30 comprised in the filter housing. The filter housing comprises a connection adapted to be coupled to a pressure source (not shown) and is configured to connect the intermediate gasket space 8 to the pressure source. As shown the intermediate gasket space 8 is formed between the two members of the gasket 5, which is arranged between the mounting structure 30 and the filter 14. The mounting structure is adapted for use as the second element of the sealing arrangement described above. As illustrated in Figs. 12a and 12b, a conduit 121 in the form of a tube can be provided within the filter housing and be configured to be inserted through one of the elongated gasket members so that the intermediate gasket space 8 between two elongated gasket members of the gasket 5 can be connected to a pressure source. Fig. 12a shows the housing and the filter before the conduit 121 has been inserted into the intermediate gasket space 8, and Fig. 12b shows the conduit when inserted.

Fig. 13 shows an alternative embodiment of a filter housing configured for mounting of a filter 14 against a mounting structure 15,30 comprised in the filter housing, which can also be used as the second element of the above sealing arrangement can have a channel or conduit 120 arranged through the mounting structure 15,30, whereby the intermediate gasket space 8 between the two elongated gasket members 6,7 of a gasket 5 arranged between the mounting structure 15,30 and the filter 14 can be connected to a pressure source. A mounting structure according to this embodiment is also shown in Fig. 1-2. The gasket 5 can be pre-attached to either of the filter or the mounting structure before assembly.

Fig. 14 shows schematically an embodiment of a filter housing 24 comprising a conduit 121 having a connector 122 configured to be connected to a conduit 12 provided in the filter, where the conduit 12 connects the intermediate gasket space 8 with the surroundings and which can thus be coupled to the pressure source by the connector. The shown example illustrates a conduit 12 pre-arranged through the gasket member. However, all the embodiments shown in Figs. 9a-9c' can be attached to a connector in a similar manner.

## Claims

1. A method (100) of improving leak tightness in a seal between a frame (13) of a filter element (14) and a mounting structure (15) against which the frame of filter element is mounted, comprising applying a pressure (101) to an intermediate gasket space (8) of one or more sealing arrangements by means of a pressure source (10), said one or more sealing arrangements (1) comprising a gasket (5) arranged to seal a gap (2) formed between a first element (3) and a second element (4), wherein the gasket is arranged to be located in the gap (2) and to be in contact with the first and the second elements (3,4), the first element being comprised in the frame (13) of the filter element (14) and the second element is comprised in the mounting structure (15) against which the frame of filter element is mounted, and in that the gasket comprises two elongated gasket members (6,7) located on a distance from each other so as to form an intermediate gasket space (8) confined by the gasket members (6,7) and said first and second elements (3,4), the sealing arrangement further comprising a pressure source (10) adapted to apply a pressure on the intermediate gasket space (8), said pressure source being configured to maintain a set pressure difference towards the surroundings, wherein the sealing arrangement further comprises an control sensor (16) located between the pressure source (10) and the surroundings, said control sensor (16) being configured to communicate with an evaluation device (17),
wherein the method comprises continuously applying pressure to the intermediate gasket space (8) by means of the pressure source (10) and obtaining a control value (105) from a control sensor (16); and, if said control value from the control sensor deviates from a control setpoint value, establishing (106) that the pressure source (10) is not operating.

2. The method of claim 1, comprising continuously obtaining said control values from the control sensor and continuously comparing said control values with the control setpoint values, and optionally activating (107) a backup pressure source (18) if said control value from the control sensor (16) deviates from said control setpoint value.

3. The method of any one of claims 1-2, wherein the sealing arrangement further comprises a leakage monitoring device (9) comprising a leakage sensor (11) positioned in the conduit between the pressure source (10) and the intermediate gasket space (8), the method further comprising continuously monitoring of leak tightness by
- continuously obtaining a leakage detection values (102) from the leakage sensor (11),
- comparing said leakage detection value (103) with a setpoint value; and
- if said leakage detection value from the leakage sensor (11) is equal to, or exceeds said setpoint value, generating a message (104) indicating leakage.

4. A sealing arrangement (1) comprising a gasket (5) arranged to seal a gap (2) formed between a first element (3) and a second element (4), wherein the gasket is arranged to be located in the gap (2) and to be in contact with the first and the second elements (3,4), the first element being comprised in a frame (13) of a filter element (14) and the second element is comprised in a mounting structure (15) against which the frame of filter element is mounted, and in that the gasket comprises two elongated gasket members (6,7) located on a distance from each other so as to form an intermediate gasket space (8) confined by the gasket members (6,7) and said first and second elements (3,4), a pressure source, **characterized in that** said pressure source is adapted to continuously apply a pressure on the intermediate gasket space (8), said pressure source being configured to maintain a set pressure difference towards the surroundings, wherein the sealing arrangement further comprises an control sensor (16) located between the pressure source (10) and the surroundings, said control sensor (16) being configured to communicate with an evaluation device (17) in order to allow monitoring that the pressure source is operating properly, and a leakage monitoring device (9) comprising a leakage sensor (11) positioned in the conduit between the pressure source (10) and the intermediate gasket space (8).

5. The sealing arrangement of claim 4, wherein the pressure source is arranged in fluid communication with the intermediate gasket space (8) between the gasket members (6,7) via a channel or conduit (12; 120, 121).

6. The sealing arrangement of any one of claims 4 or 5, wherein the channel or conduit (120) is arranged to be connected to the intermediate gasket space (8) through the mounting structure (15) or through the frame (13) of a filter (14).

7. The sealing arrangement of any one of claims 4-6, further comprising a backup pressure source (18) arranged parallel to the pressure source (10).

8. The sealing arrangement of any one of claims 4-7, wherein the leakage sensor (11) is an air flow sensor or a pressure sensor.

9. A system comprising one or more confined volumes (19a,19b), each volume being sealed by a sealing arrangement as defined in any one of claims 4-8, wherein the intermediate gasket space (8a,8b) of each sealing arrangement comprised in the system is preferably connected to the same pressure source (10).

10. The system of claim 9, further comprising an evaluation device (17); wherein the intermediate gasket space (8a,8b) of each sealing arrangement is connected to the pressure source (10) via conduits (12a,12b), and a leakage sensor (11a,11b) is located on each conduit (12a,12b) between the pressure source (10) and the intermediate gasket space (8a,8b), each leakage sensor (11a,11b) being configured to continuously transmit leakage detection data to the evaluation device (17), and the evaluation device (17) being configured to continuously receive said leakage detection data.

11. The system of claim 10, wherein the evaluation device (17) comprises a control unit (41) comprising a memory unit (42) and a processor (43) and preferably a communication means (44) arranged to be able to communicate with an external recipient (45), wherein the memory unit (42) is arranged to be able to store computer readable code that when executed on the processor (43) performs the method according to claims 1-3.

12. The system of any one of claims 9-11, wherein the confined volume (19a,19b) is a containment enclosure, comprising a housing (24) and an air inlet opening (25) into which a filter (26) is fitted, wherein the filter is sealed to the housing by means of a sealing arrangement as defined in any one of claims 4-8, or wherein the confined volume (19a,19b) is a cleanroom or a pharmaceutical production space provided with an air filtration arrangement comprising a mounting structure wherein the filter (26) is sealed to the a mounting structure by means of a sealing arrangement as defined in any one of claims 4-8.

13. A computer program product arranged to perform the method according to any one of claims 1-3, when executed in a system according to any one of claims 9-12.

14. A filter housing (24) configured for mounting of an air filter (14) against a mounting structure (15, 30) comprised in the filter housing, **characterized in that** the mounting structure is configured to be used as the second element of the sealing arrangement of claims 4-8, and **in that** the filter housing comprises a connection (120, 121) adapted to be coupled to a pressure source (10), and being configured to connect an intermediate gasket space (8) to the pressure source, said intermediate gasket space (8) being formed between two elongated gasket members (6, 7) of a gasket (5) arranged between the mounting structure (15,30) and the filter (14), wherein the connection is a conduit (121) provided within the filter housing, said conduit comprising an insertion portion configured to be inserted through one of the elongated gasket members (6, 7) of a gasket (5) arranged between the mounting structure (15,30) and the filter (14); or wherein the connection is a conduit (121) comprising a connector (122) configured to be connected to a channel or conduit (12) provided in the air filter.

15. An air filter (14) for use as the first element (3) in the sealing arrangement of claims 4-8, the air filter being configured to be mounted to a filter mounting structure (15, 30) in a filter housing (24) and comprising
a filter frame (13) having an opening (25) in which an air filter media pack assembly (40) is positioned, or can be positioned, and
a gasket (5) configured to seal a gap (2) between the filter frame and the filter mounting (15, 30) structure in the filter housing (24),
**characterized in that** the gasket is attached to the filter frame and is arranged to surround the opening (25); and
the gasket (5) comprises two elongated gasket members (6, 7), where an inner elongated gasket member (6) is configured to surround the opening (25) where the air filter media pack assembly (40) is positioned, and an outer elongated gasket member (7) is configured to surround the inner gasket (6) and the opening (25); and
the gasket is attached to the frame so that the elongated gasket members (6,7) are held in position on a distance from each other so as to form an intermediate gasket space (8) between the gasket members (6,7) and a surface (13a) of the frame onto which the gasket is attached; and
the air filter comprises a channel or conduit (12) arranged to connect the intermediate gasket space (8) with the surroundings, and being configured to be connected to a pressure source to allow application of pressure on the intermediate gasket space (8) during use, , wherein the channel or conduit (12) is arranged through the filter frame, or through one of the elongated gasket member (6, 7), or is disposed on the surface (13a) of the filter frame (13) onto which the elongated gasket members are attached.

## Patentansprüche

1. Verfahren (100) zum Verbessern von Leckdichtheit in einer Dichtung zwischen einem Rahmen (13) eines Filterelements (14) und einer Montagestruktur (15), an der der Rahmen des Filterelements montiert ist, umfassend Ausüben eines Drucks (101) auf einen Zwischenraum (8) für Dichtungen einer oder mehrerer Dichtungsanordnungen mittels einer Druckquelle (10), wobei die eine oder die mehreren Dichtungsanordnungen (1) eine Dichtung (5) umfassen, die angeordnet ist, um eine Lücke (2) abzudichten, die zwischen einem ersten Element (3) und einem zweiten Element (4) gebildet ist, wobei die Dichtung so angeordnet ist, das sie sich in der Lücke (2) befindet und in Kontakt mit dem ersten und dem zweiten Element (3, 4) steht, wobei das erste Element in dem Rahmen (13) des Filterelements (14) umfasst ist und das zweite Element in der Montagestruktur (15), an der der Rahmen des Filterelements montiert ist, umfasst ist, und wobei die Dichtung zwei längliche Teile (6, 7) der Dichtung umfasst, die sich in einem Abstand zueinander befinden, um einen Zwischenraum (8) für Dichtungen zu bilden, der durch die Teile (6, 7) der Dichtung und das erste und zweite Dichtungselement (3, 4) begrenzt ist, die Dichtungsanordnung ferner eine Druckquelle (10) umfasst, die dazu ausgelegt ist, einen Druck auf den Zwischenraum (8) für Dichtungen auszuüben, und die Druckquelle dazu konfiguriert ist, eine eingestellte Druckdifferenz in Richtung der Umgebung aufrechtzuerhalten, wobei die Dichtungsanordnung ferner einen Kontrollsensor (16) umfasst, der sich zwischen der Druckquelle (10) und der Umgebung befindet, wobei der Kontrollsensor (16) dazu konfiguriert ist, mit einer Evaluierungsvorrichtung (17) zu kommunizieren,
wobei das Verfahren kontinuierliches Ausüben von Druck auf den Zwischenraum (8) für Dichtungen mittels der Druckquelle (10) und Erlangen eines Kontrollwerts (105) von einem Kontrollsensor (16); und, wenn der Kontrollwert von dem Kontrollsensor von einem Kontrollsollwert abweicht, Feststellen (106), dass die Druckquelle (10) nicht betrieben wird, umfasst.

2. Verfahren nach Anspruch 1, umfassend kontinuierliches Erlangen der Kontrollwerte von dem Kontrollsensor und kontinuierliches Vergleichen der Kontrollwerte mit den Kontrollsollwerten und optional Aktivieren (107) einer Reservedruckquelle (18), wenn der Kontrollwert von dem Kontrollsensor (16) von dem Kontrollsollwert abweicht.

3. Verfahren nach einem der Ansprüche 1-2, wobei die Dichtungsanordnung ferner eine Lecküberwachungsvorrichtung (9) umfasst, die einen Lecksensor (11) umfasst, der in der Leitung zwischen der Druckquelle (10) und dem Zwischenraum für Dichtungen (8) positioniert ist, wobei das Verfahren ferner kontinuierliches Überwachen von Leckdichtheit durch Folgendes umfasst:
- kontinuierliches Erlangen eines Leckdetektionswerts (102) von dem Lecksensor (11),
- Vergleichen des Leckdetektionswerts (103) mit einem Sollwert; und
- wenn der Leckdetektionswert von dem Lecksensor (11) gleich dem Sollwert ist oder diesen überschreitet, Generieren einer Nachricht (104), die ein Leck angibt.

4. Dichtungsanordnung (1), umfassend eine Dichtung (5), die angeordnet ist, um eine Lücke (2) abzudichten, die zwischen einem ersten Element (3) und einem zweiten Element (4) gebildet ist, wobei die Dichtung so angeordnet ist, dass sie sich in der Lücke (2) befindet und in Kontakt mit dem ersten und dem zweiten Element (3, 4) steht, wobei das erste Element in einem Rahmen (13) eines Filterelements (14) umfasst ist und das zweite Element in einer Montagestruktur (15), an der der Rahmen des Filterelements montiert ist, umfasst ist und wobei die Dichtung zwei längliche Teile (6, 7) der Dichtung umfasst, die sich in einem Abstand zueinander befinden, um einen Zwischenraum (8) für Dichtungen zu bilden, der durch die Teile (6, 7) der Dichtung und das erste und zweite Element (3, 4) begrenzt ist, eine Druckquelle, **dadurch gekennzeichnet, dass** die Druckquelle dazu ausgelegt ist, kontinuierlich einen Druck auf den Zwischenraum (8) für Dichtungen auszuüben, und die Druckquelle dazu konfiguriert ist, eine eingestellte Druckdifferenz in Richtung der Umgebung aufrechtzuerhalten, wobei die Dichtungsanordnung ferner einen Kontrollsensor (16), der sich zwischen der Druckquelle (10) und der Umgebung befindet, wobei der Kontrollsensor (16) dazu konfiguriert ist, mit einer Evaluationsvorrichtung (17) zu kommunizieren, um Überwachen, dass die Druckquelle ordnungsgemäß betrieben wird, zu ermöglichen, und eine Lecküberwachungsvorrichtung (9), die einen Lecksensor (11) umfasst, der in der Leitung zwischen der Druckquelle (10) und dem Zwischenraum (8) für Dichtungen positioniert ist, umfasst.

5. Dichtungsanordnung nach Anspruch 4, wobei die Druckquelle über einen Kanal oder eine Leitung (12; 120, 121) zwischen den Teilen (6, 7) der Dichtung in Fluidverbindung mit dem Zwischenraum (8) für Dichtungen angeordnet ist.

6. Dichtungsanordnung nach einem der Ansprüche 4 oder 5, wobei der Kanal oder die Leitung (120) angeordnet ist, um durch die Montagestruktur (15) oder durch den Rahmen (13) eines Filters (14) mit dem Zwischenraum (8) für Dichtungen verbunden zu werden.

7. Dichtungsanordnung nach einem der Ansprüche 4-6, ferner umfassend eine Reservedruckquelle (18), die parallel zu der Druckquelle (10) angeordnet ist.

8. Dichtungsanordnung nach einem der Ansprüche 4-7, wobei der Lecksensor (11) ein Luftströmungssensor oder ein Drucksensor ist.

9. System, umfassend ein oder mehrere begrenzte Volumen (19a, 19b), wobei jedes Volumen durch eine Dichtungsanordnung nach einem der Ansprüche 4-8 abgedichtet ist, wobei der Zwischenraum (8a, 8b) für Dichtungen jeder in dem System umfassten Dichtungsanordnung vorzugsweise mit derselben Druckquelle (10) verbunden ist.

10. System nach Anspruch 9, ferner umfassend eine Evaluierungsvorrichtung (17); wobei der Zwischenraum (8a, 8b) für Dichtungen jeder Dichtungsanordnung über Leitungen (12a, 12b) mit der Druckquelle (10) verbunden ist und sich an jeder Leitung (12a, 12b) zwischen der Druckquelle (10) und dem Zwischenraum (8a, 8b) für Dichtungen ein Lecksensor (11a, 11b) befindet, jeder Lecksensor (11a, 11b) dazu konfiguriert ist, kontinuierlich Leckdetektionsdaten an die Evaluierungsvorrichtung (17) zu übertragen, und die Evaluierungsvorrichtung (17) dazu konfiguriert ist, die Lecktdetektionsdaten kontinuierlich zu empfangen.

11. System nach Anspruch 10, wobei die Evaluierungsvorrichtung (17) eine Kontrolleinheit (41) umfasst, die eine Speichereinheit (42) und einen Prozessor (43) und vorzugsweise ein Kommunikationsmittel (44), das angeordnet ist, um in der Lage zu sein, mit einem externen Empfänger (45) zu kommunizieren, umfasst, wobei die Speichereinheit (42) angeordnet ist, um in der Lage zu sein, computerlesbaren Code zu speichern, der bei Ausführung auf dem Prozessor (43) das Verfahren nach einem der Ansprüche 1-3 durchführt.

12. System nach einem der Ansprüche 9-11, wobei das begrenzte Volumen (19a, 19b) eine Einschlussummantelung ist, die ein Gehäuse (24) und eine Lufteinlassöffnung (25), in die ein Filter (26) eingepasst ist, umfasst, wobei das Filter mittels einer Dichtungsanordnung nach einem der Ansprüche 4-8 an dem Gehäuse abgedichtet ist, oder wobei das begrenzte Volumen (19a, 19b) ein Reinraum oder ein Raum für pharmazeutische Produktion ist, der mit einer Luftfilterungsanordnung, die eine Montagestruktur umfasst, bereitgestellt ist, wobei das Filter (26) mittels einer Dichtungsanordnung nach einem der Ansprüche 4-8 an der Montagestruktur abgedichtet ist.

13. Computerprogrammprodukt, das angeordnet ist, um das Verfahren nach einem der Ansprüche 1-3 durchzuführen, wenn es in einem System nach einem der Ansprüche 9-12 ausgeführt wird.

14. Filtergehäuse (24), das dazu konfiguriert ist, ein Luftfilter (14) an einer Montagestruktur (15, 30), die in dem Filtergehäuse umfasst ist, zu montieren, **dadurch gekennzeichnet, dass** die Montagestruktur dazu konfiguriert ist, als das zweite Element der Dichtungsanordnung nach Anspruch 4-8 verwendet zu werden, und dadurch, dass das Filtergehäuse eine Verbindung (120, 121) umfasst, die dazu ausgelegt ist, an eine Druckquelle (10) gekoppelt zu werden, und dazu konfiguriert ist, einen Zwischenraum (8) für Dichtungen mit der Druckquelle zu verbinden, wobei der Zwischenraum (8) für Dichtungen zwischen zwei länglichen Teilen (6, 7) der Dichtung einer Dichtung (5), die zwischen der Montagestruktur (15, 30) und dem Filter (14) angeordnet ist, gebildet ist, wobei die Verbindung eine Leitung (121) ist, die innerhalb des Filtergehäuses bereitgestellt ist, wobei die Leitung einen Einfügeabschnitt umfasst, der dazu konfiguriert ist, durch einen der länglichen Teile (6, 7) der Dichtung einer Dichtung (5), die zwischen der Montagestruktur (15, 30) und dem Filter (14) angeordnet ist, eingefügt zu werden;
oder wobei die Verbindung eine Leitung (121) ist, die einen Verbinder (122) umfasst, der dazu konfiguriert ist, mit einem Kanal oder einer Leitung (12), der/die in dem Luftfilter bereitgestellt ist, verbunden zu werden.

15. Luftfilter (14) zur Verwendung als das erste Element (3) in der Dichtungsanordnung nach Anspruch 4-8, wobei das Luftfilter dazu konfiguriert ist, an eine Filtermontagestruktur (15, 30) in einem Filtergehäuse (24) montiert zu werden, und Folgendes umfasst:
einen Filterrahmen (13), der eine Öffnung (25) aufweist, in der eine Luftfiltermedienpackbaugruppe (40) positioniert ist oder positioniert werden kann, und
eine Dichtung (5), die dazu konfiguriert ist, eine Lücke (2) zwischen dem Filterrahmen und der Filtermontagestruktur (15, 30) in dem Filtergehäuse (24) abzudichten,
**dadurch gekennzeichnet, dass** die Dichtung an dem Filterrahmen angebracht und angeordnet ist, um die Öffnung (25) zu umgeben; und
die Dichtung (5) zwei längliche Teile (6, 7) der Dichtung umfasst, wobei ein inneres längliches Teil (6) der Dichtung, dazu konfiguriert ist, die Öffnung (25) dort zu umgeben, wo die Luftfiltermedienpackbaugruppe (40) positioniert ist, und ein äußeres Teil (7) der Dichtung dazu konfiguriert ist, die innere Dichtung (6) und die Öffnung (25) zu umgeben; und
die Dichtung derart an dem Rahmen angebracht ist, dass die länglichen Teile (6, 7) der Dichtung in einem Abstand zueinander in Position gehalten werden, um einen Zwischenraum für Dichtungen (8) zwischen den Teilen (6, 7) der Dichtung und einer Fläche (13a) des Rahmens, an der die Dichtung angebracht ist, zu bilden; und
das Luftfilter einen Kanal oder eine Leitung (12) umfasst, der/die angeordnet ist, um den Zwischenraum (8) für Dichtungen mit der Umgebung zu verbinden, und dazu konfiguriert ist, mit einer Druckquelle verbunden zu werden, um während der Verwendung Ausüben von Druck auf den Zwischenraum (8) für Dichtungen zu ermöglichen, wobei der Kanal oder die Leitung (12) durch den Filterrahmen oder durch einen der länglichen Teile (6, 7) der Dichtung angeordnet ist oder auf der Fläche (13a) des Filterrahmens (13), an der die länglichen Teile der Dichtung angebracht sind, angeordnet ist.

## Revendications

1. Procédé (100) d'amélioration d'étanchéité aux fuites dans un joint d'étanchéité entre un cadre (13) d'un élément filtrant (14) et une structure de montage (15) contre laquelle le cadre d'élément filtrant est monté, comprenant l'application d'une pression (101) sur un espace de garniture intermédiaire (8) d'un ou de plusieurs agencements d'étanchéité au moyen d'une source de pression (10), lesdits un ou plusieurs agencements d'étanchéité (1) comprenant une garniture (5) agencée pour sceller un écart (2) formé entre un premier élément (3) et un second élément (4), dans lequel la garniture est agencée pour être située dans l'écart (2) et pour être en contact avec les premier et second éléments (3, 4), le premier élément étant compris dans le cadre (13) de l'élément filtrant (14) et le second élément est compris dans la structure de montage (15) contre laquelle le cadre d'élément filtrant est monté, et en ce que la garniture comprend deux éléments de garniture allongés (6, 7) situés à distance l'un de l'autre de manière à former un espace de garniture intermédiaire (8) confiné par les éléments de garniture (6, 7) et lesdits premier et second éléments (3, 4), l'agencement d'étanchéité comprenant en outre une source de pression (10) conçue pour appliquer une pression sur l'espace de garniture intermédiaire (8), ladite source de pression étant configurée pour maintenir une différence de pression réglée vers l'environnement, dans lequel l'agencement d'étanchéité comprend en outre un capteur de commande (16) situé entre la source de pression (10) et l'environnement, ledit capteur de commande (16) étant configuré pour communiquer avec un dispositif d'évaluation (17),
dans lequel le procédé comprend l'application continue d'une pression sur l'espace de garniture intermédiaire (8) au moyen de la source de pression (10) et l'obtention d'une valeur de commande (105) à partir d'un capteur de commande (16) ; et, si ladite valeur de commande provenant du capteur de commande s'écarte d'une valeur de consigne de commande, l'établissement (106) que la source de pression (10) ne fonctionne pas.

2. Procédé selon la revendication 1, comprenant l'obtention continue desdites valeurs de commande provenant du capteur de commande et la comparaison continue desdites valeurs de commande avec les valeurs de consigne de commande, et éventuellement l'activation (107) d'une source de pression de secours (18) si ladite valeur de commande provenant du capteur de commande (16) s'écarte de ladite valeur de consigne de commande.

3. Procédé selon l'une quelconque des revendications 1 et 2, dans lequel l'agencement d'étanchéité comprend en outre un dispositif de surveillance de fuite (9) comprenant un capteur de fuite (11) positionné dans le conduit entre la source de pression (10) et l'espace de garniture intermédiaire (8), le procédé comprenant en outre une surveillance continue d'étanchéité aux fuites par
- l'obtention continue de valeurs de détection de fuite (102) à partir du capteur de fuite (11),
- la comparaison de ladite valeur de détection de fuite (103) à une valeur de consigne ; et
- si ladite valeur de détection de fuite provenant du capteur de fuite (11) est supérieure ou égale à ladite valeur de consigne, la génération d'un message (104) indiquant une fuite.

4. Agencement d'étanchéité (1) comprenant une garniture (5) agencée pour sceller un écart (2) formé entre un premier élément (3) et un second élément (4), dans lequel la garniture est agencée pour être située dans l'écart (2) et pour être en contact avec les premier et second éléments (3,4), le premier élément étant compris dans un cadre (13) d'un élément filtrant (14) et le second élément est compris dans une structure de montage (15) contre laquelle le cadre d'élément filtrant est monté, et en ce que la garniture comprend deux éléments de garniture allongés (6, 7) situés à distance l'un de l'autre de manière à former un espace de garniture intermédiaire (8) confiné par les éléments de garniture (6, 7) et lesdits premier et second éléments (3,4), une source de pression, **caractérisé en ce que** ladite source de pression est conçue pour appliquer en continu une pression sur l'espace de garniture intermédiaire (8), ladite source de pression étant configurée pour maintenir une différence de pression réglée vers l'environnement, dans lequel l'agencement d'étanchéité comprend en outre un capteur de commande (16) situé entre la source de pression (10) et l'environnement, ledit capteur de commande (16) étant configuré pour communiquer avec un dispositif d'évaluation (17) afin de permettre la surveillance du bon fonctionnement de la source de pression, et un dispositif de surveillance de fuite (9) comprenant un capteur de fuite (11) positionné dans le conduit entre la source de pression (10) et l'espace de garniture intermédiaire (8).

5. Agencement d'étanchéité selon la revendication 4, dans lequel la source de pression est agencée en communication fluidique avec l'espace de garniture intermédiaire (8) entre les éléments de garniture (6, 7) via un canal ou conduit (12 ; 120, 121).

6. Agencement d'étanchéité selon l'une quelconque des revendications 4 ou 5, dans lequel le canal ou conduit (120) est agencé pour être relié à l'espace de garniture intermédiaire (8) à travers la structure de montage (15) ou à travers le cadre (13) d'un filtre (14).

7. Agencement d'étanchéité selon l'une quelconque des revendications 4 à 6, comprenant en outre une source de pression de secours (18) agencée parallèlement à la source de pression (10).

8. Agencement d'étanchéité selon l'une quelconque des revendications 4 à 7, dans lequel le capteur de fuite (11) est un capteur de débit d'air ou un capteur de pression.

9. Système comprenant un ou plusieurs volumes confinés (19a, 19b), chaque volume étant scellé par un agencement d'étanchéité tel que défini dans l'une quelconque des revendications 4 à 8, dans lequel l'espace de garniture intermédiaire (8a, 8b) de chaque agencement d'étanchéité compris dans le système est de préférence relié à la même source de pression (10).

10. Système selon la revendication 9, comprenant en outre un dispositif d'évaluation (17) ; dans lequel l'espace de garniture intermédiaire (8a, 8b) de chaque agencement d'étanchéité est relié à la source de pression (10) via des conduits (12a, 12b), et un capteur de fuite (11a, 11b) est situé sur chaque conduit (12a, 12b) entre la source de pression (10) et l'espace de garniture intermédiaire (8a, 8b), chaque capteur de fuite (11a, 11b) étant configuré pour transmettre en continu des données de détection de fuite au dispositif d'évaluation (17), et le dispositif d'évaluation (17) étant configuré pour recevoir en continu lesdites données de détection de fuite.

11. Système selon la revendication 10, dans lequel le dispositif d'évaluation (17) comprend une unité de commande (41) comprenant une unité de mémoire (42) et un processeur (43) et de préférence un moyen de communication (44) agencé pour pouvoir communiquer avec un destinataire externe (45), dans lequel l'unité de mémoire (42) est agencée pour pouvoir stocker un code lisible par ordinateur qui, lorsqu'il est exécuté sur le processeur (43), exécute le procédé selon les revendications 1 à 3.

12. Système selon l'une quelconque des revendications 9 à 11, dans lequel le volume confiné (19a, 19b) est une enceinte de confinement, comprenant un boîtier (24) et une ouverture d'entrée d'air (25) dans laquelle un filtre (26) est ajusté, dans lequel le filtre est scellé au boîtier au moyen d'un agencement d'étanchéité tel que défini dans l'une quelconque des revendications 4 à 8, ou dans lequel le volume confiné (19a, 19b) est une salle blanche ou un espace de production pharmaceutique pourvu d'un agencement de filtration d'air comprenant une structure de montage, dans lequel le filtre (26) est scellé à la structure de montage au moyen d'un agencement d'étanchéité tel que défini dans l'une quelconque des revendications 4 à 8.

13. Produit de programme informatique agencé pour exécuter le procédé selon l'une quelconque des revendications 1 à 3, lorsqu'il est exécuté dans un système selon l'une quelconque des revendications 9 à 12.

14. Boîtier de filtre (24) configuré pour le montage d'un filtre à air (14) contre une structure de montage (15, 30) comprise dans le boîtier de filtre, **caractérisé en ce que** la structure de montage est configurée pour être utilisée comme étant le second élément de l'agencement d'étanchéité selon les revendications 4 à 8, et **en ce que** le boîtier de filtre comprend une liaison (120, 121) conçue pour être couplée à une source de pression (10), et étant configurée pour relier un espace de garniture intermédiaire (8) à la source de pression, ledit espace de garniture intermédiaire (8) étant formé entre deux éléments de garniture allongés (6, 7) d'une garniture (5) agencée entre la structure de montage (15, 30) et le filtre (14), dans lequel la liaison est un conduit (121) prévu à l'intérieur du boîtier de filtre, ledit conduit comprenant une partie d'insertion configurée pour être insérée à travers l'un des éléments de garniture allongés (6, 7) d'une garniture (5) agencée entre la structure de montage (15, 30) et le filtre (14) ; ou dans lequel la liaison est un conduit (121) comprenant un raccord (122) configuré pour être relié à un canal ou conduit (12) prévu dans le filtre à air.

15. Filtre à air (14) destiné à être utilisé comme étant le premier élément (3) dans l'agencement d'étanchéité selon les revendications 4 à 8, le filtre à air étant configuré pour être monté sur une structure de montage de filtre (15, 30) dans un boîtier de filtre (24) et comprenant
un cadre de filtre (13) ayant une ouverture (25) dans laquelle un ensemble paquet de support de filtre à air (40) est positionné, ou peut être positionné, et
une garniture (5) configurée pour sceller un écart (2) entre le cadre de filtre et la structure de montage de filtre (15, 30) dans le boîtier de filtre (24),
**caractérisé en ce que** la garniture est fixée au cadre de filtre et est agencée pour entourer l'ouverture (25) ; et
la garniture (5) comprend deux éléments de garniture allongés (6, 7), où un élément de garniture allongé interne (6) est configuré pour entourer l'ouverture (25) où l'ensemble paquet de support de filtre à air (40) est positionné, et un élément de garniture allongé externe (7) est configuré pour entourer la garniture interne (6) et l'ouverture (25) ; et
la garniture est fixée au cadre de sorte que les éléments de garniture allongés (6, 7) soient maintenus en position à distance l'un de l'autre de manière à former un espace de garniture intermédiaire (8) entre les éléments de garniture (6, 7) et une surface (13a) du cadre sur laquelle la garniture est fixée ; et
le filtre à air comprend un canal ou conduit (12) agencé pour relier l'espace de garniture intermédiaire (8) à l'environnement, et étant configuré pour être relié à une source de pression pour permettre une application de pression sur l'espace de garniture intermédiaire (8) pendant l'utilisation, dans lequel le canal ou conduit (12) est agencé à travers le cadre de filtre, ou à travers l'un des éléments de garniture allongés (6, 7), ou est disposé sur la surface (13a) du cadre de filtre (13) sur laquelle les éléments de garniture allongés sont fixés.
